# EUROPÄISCHE PATENTSCHRIFT

(11) **EP 2 902 348 B1**
(45) Veröffentlichungstag und Bekanntmachung des Hinweises auf die Patenterteilung: **10.01.2018**
(21) Anmeldenummer: 15152894.0
(22) Anmeldetag: 28.01.2015
(51) Int. Cl.: B65G 69/00

(54) **Anfahrpuffervorrichtung**
Start-up buffer
Dispositif de butoir

(30) Priorität: 31.01.2014 DE 102014101237; 10.04.2014 DE 102014105145
(43) Veröffentlichungstag der Anmeldung: 05.08.2015
(73) Patentinhaber: Hörmann Alkmaar BV, 1822 BB Alkmaar (NL)
(72) Erfinder: Stroet, Franciscus Johannes, 1704 WL Heerhugowaard (NL); Edel, Yves, 1531 AT Wormer (NL)
(74) Vertreter: Kastel, Stefan

(56) Entgegenhaltungen:
- DE-A1- 10 313 268
- DE-U1- 29 600 207
- US-A- 5 004 394
- US-A- 5 881 414
- US-B1- 6 497 076

## Beschreibung

Die Erfindung betrifft eine Anfahrpuffervorrichtung mit wenigstens einem an einer Halterung gehaltenen Anfahrpuffer, wobei die Halterung zwischen einer angehobenen Position und einer abgesenkten Position beweglich ist und einer Arretiereinrichtung zum Arretieren der Halterung. Weiter betrifft die Erfindung eine mit einer solchen Anfahrpuffervorrichtung versehene Ladestellenausrüstung.

Anfahrpuffer werden im Bereich von Ladestellen meist seitlich versetzt an einer Ladestelle angebracht. Anfahrpuffer schützen eine Rampe, ein Ladedock oder eine an einer Ladestelle befindliche ladetechnische Einrichtungen, wie z.B. ein Tor zum Verschließen einer Ladeöffnung und/oder eine Ladebrücke sowie das Gebäude vor Beschädigungen. Sie nehmen die dynamischen Kräfte des Lastkraftwagens beim Andocken auf und sind gleichzeitig stabil und flexibel bzw. elastisch. Zur Montage von Anfahrpuffern stehen Halterungen mit Montageplatten und Montagekonsolen in unterschiedlicher Ausgestaltung zur Verfügung.

Es gibt beispielsweise stationäre Anfahrpuffer, die an einer Laderampe außen stationär angebracht werden. Derartige Anfahrpuffer können z.B. aus Gummi oder Polyurethan bestehen. Es gibt auch Stahl-Anfahrpuffer, die aus einem vollflächig dämpfenden Innenkern und einer robusten äußeren Stahlplatte aufgebaut sind.

Bei der hier vorliegenden Erfindung geht es jedoch um Halterungen für bewegliche Anfahrpuffer. Bewegliche Anfahrpuffer sind an einer Halterung nach oben und nach unten beweglich gelagert oder geführt. Derartige Haltepuffer können beispielsweise derart ausgebildet sein, dass sie den Auf- und Abbewegungen des Lastkraftwagens, z.B. beim Beladen und Entladen folgen. Andererseits bieten höhenverstellbare Ausführungen die Möglichkeit, den Anfahrpuffer nach oben zu bewegen und dort festzuhalten. Derartige nach oben in eine obere angehobene Position bewegliche Anfahrpuffer sind insbesondere vorteilhaft für Ladestellen, bei denen ein Öffnen von Lastkraftwagen-Türen erst nach dem Andocken erfolgen soll. Hierzu sollte nach dem Andocken des Lastkraftwagens der Bewegungsraum von Lastkraftwagen-Türen frei von Hindernissen sein. Es ist daher für derartige Systeme vorteilhaft, wenn für ein Andocken die Anfahrpuffer in einer angehobenen Position stehen und nach dem Andocken in eine abgesenkte Position bewegt werden können, um dann die Türen zu öffnen.

Ein anderer vorteilhafter Anwendungsfall für derartige Anfahrpuffervorrichtungen, auf die sich auch die Erfindung bezieht, sind Ladestellen, die von besonders hohen Lastkraftwagen angefahren werden und/oder Ladestellen mit besonders niedrigen Rampen.

Zum Stand der Technik für die zuvor genannten Ausführungen wird auf die Firmendruckschrift "Verladetechnik - Komplettlösungen für mehr Effizienz" der Hörmann KG Verkaufsgesellschaft mit dem Druckdatum 05.2013, veröffentlicht im Mai 2013 und abrufbar über das Internet, verwiesen.

Anfahrpuffervorrichtungen mit Halterungen, mittels denen ein Anfahrpuffer in eine angehobene Position und in eine abgesenkte Position bewegbar ist und in der abgesenkten Position arretierbar ist, sind außerdem aus der US 6 497 076 B1 sowie der DE 20 2012 002 680 U1 bekannt.

Aus der US 6 497 076 B1 ist eine Arretiereinrichtung für die Halterung mit einem schwenkbaren Hakenelement bekannt, mittels dem die Halterung mit dem Anfahrpuffer in der abgesenkten Stellung arretierbar ist. Der Haken kann z.B. per Fuß oder auch mittels eines Aktors, beispielsweise einem Solenoid, aus seiner Verriegelungsstellung in seine Entriegelungsstellung gebracht werden, wobei dann der Anfahrpuffer durch ein durch eine Gasdruckfeder gebildetes Vorspannelement in die angehobene Position verfahrbar ist.

Bei der aus der DE 20 2012 002 680 U1 bekannten Anfahrpuffervorrichtung weist eine Arretiereinrichtung einen Elektromagneten auf, mittels dem die Halterung in der abgesenkten Position arretierbar ist und signalgesteuert entriegelbar ist.

Mit der bekannten Arretiereinrichtung ist jeweils nur eine Verriegelung in einer einzigen Stellung der Halterung möglich.

Eine weitere Anfahrpuffervorrichtung ist beispielsweise aus der US 5,881,414 A bekannt. Bei einer Ausführungsform dieser Vorrichtung ist die Vorrichtung durch einen hydraulisch betriebenen Hebelmechanismus von einer abgesenkten Position in eine angehobene Position und zurück bewegbar. Bei einer anderen Ausführungsform kann die Vorrichtung mittels eines Hydraulikantriebs zwischen der angehobenen und der abgesenkten Position bewegt werden.

Die als nächstliegender Stand der Technik angesehene DE 296 00 207 U1 offenbart einen Rampenanschlagpuffer, der über eine Feder höhenverstellbar ist und manuell verriegelt werden kann. Somit wird eine Anfahrpuffervorrichtung mit den Merkmalen des Oberbegriffs des Anspruchs 1 offenbart.

Gegenstand der DE 103 13 268 A1 ist schließlich ein höhenverstellbarer Gummipuffer, der mittels eines Linearantriebs höhenverstellbar ist.

Aufgabe der Erfindung ist es, eine Anfahrpuffervorrichtung der im Oberbegriff des Anspruchs 1 genannten Art hinsichtlich der Möglichkeiten einer unterschiedlichen Verriegelung an unterschiedlichen Positionen zu verbessern.

Diese Aufgabe wird durch eine Anfahrpuffervorrichtung mit den Merkmalen des Anspruchs 1 gelöst. Eine Ladestellenausrüstung mit einer ladetechnischen Einrichtung, wie beispielsweise einem Tor zum Verschließen der Ladeöffnung und/oder einer Ladebrücke sowie mit wenigstens einer derartigen Anfahrpuffervorrichtung zum Schutz dieser ladetechnischen Einrichtung ist Gegenstand des Nebenanspruches.

Vorteilhafte Ausgestaltungen der Erfindung sind Gegenstand der Unteransprüche.

Die Erfindung schafft gemäß einem Aspekt davon eine Anfahrpuffervorrichtung mit wenigstens einem an einer Halterung gehaltenen Anfahrpuffer, wobei die Halterung zwischen einer angehobenen Position und einer abgesenkten Position beweglich ist, und einer Arretiereinrichtung zum Arretieren der Halterung, wobei die Anfahrpuffervorrichtung derart ausgebildet ist, dass sie in wenigstens einer der Bewegungsrichtungen ausschließlich manuell oder motorlos bewegbar ist und nicht an eine externe Energiequelle anzuschließen ist, wobei die Halterung an einen Hydraulikzylinder und/oder eine Hydraulikpumpe so angeschlossen ist, dass eine Veränderung der Lage der Halterung eine Veränderung der Stellung des Hydraulikzylinders bzw. der Hydraulikpumpe unter Zu- und/oder Abfluss von Hydraulikmedium bewirkt, und wobei die Arretiereinrichtung eine Hydrauliksperreinrichtung zum Sperren des Zu- und/oder Abflusses von Hydraulikmedium zu und/oder von dem Hydraulikzylinder bzw. der Hydraulikpumpe zwecks Arretierung des Hydraulikzylinders bzw. der Hydraulikpumpe umfasst. Die Anfahrpuffervorrichtung ist derart ausgebildet, dass sie wenigstens in der nach oben gerichteten Bewegungsrichtung ausschließlich manuell oder motorlos bewegbar ist.

Die Arretiereinrichtung wirkt somit nicht unmittelbar mittels Magneten oder mittels Haken oder sonstigen formschlüssigen Einrichtungen an der Halterung; vielmehr ist die Halterung z.B. an einen Hydraulikzylinder angeschlossen, so dass bei einer Bewegung der Halterung - zumindest bei Bewegung in einer ersten der beiden Bewegungsrichtung zwischen den beiden Positionen - Hydraulikmedium in den Hydraulikzylinder fließt oder aus ihm hinaus fließt. Vorzugsweise ist an den Hydraulikzylinder ein Hydraulikkreis angeschlossen. Anstelle eines Hydraulikzylinders mit Kolben und Gehäuse kann auch jede andere Bauart von Hydraulikpumpe verwendet werden, deren beweglicher Antrieb durch Sperren des Hydraulikzu- oder -abflusses arretierbar ist und an die Halterung zur Arretierung gekoppelt wird.

Die Arretiereinrichtung weist nun eine Hydrauliksperreinrichtung zum Sperren des Zuflusses oder Abflusses von Hydraulikmedium zu dem Hydraulikzylinder bzw. der Hydraulikpumpe auf. Nachdem Hydraulikmedium inkompressibel ist, lässt sich damit der Hydraulikzylinder oder die sonstige Hydraulikpumpe zumindest in eine Richtungsbewegung hin sperren. Dadurch lässt sich zuverlässig die Halterung arretieren und somit beispielsweise ein an der Halterung befindlicher Anfahrpuffer in einer gewünschten Position zumindest gegen Bewegung in eine der Bewegungsrichtungen verriegeln.

Bei einer derartigen Arretierung über Sperrung eines Hydraulikkreises oder dergleichen ist eine stufenlose Auswahl der Position, in der die Halterung und damit der Anfahrpuffer zu verriegeln ist, möglich. Somit kann der Anfahrpuffer in der untersten abgesenkten Position und in der oberen Position und auch in jeder beliebigen Zwischenposition verriegelt werden, ohne dass hierzu weitere Einrichtungen, wie weitere Hakenelemente oder dergleichen, notwendig wären. Hierdurch ist die Bedienbarkeit des beweglichen Anfahrpuffers wesentlich verbessert.

Unter Hydraulikzylinder wird hier jede Art von mit Flüssigkeit betreibbaren linear beweglichen Arbeitseinheiten, umfassend ein Gehäuse mit einem eine Flüssigkeitskammer begrenzenden Kolben, verstanden. Der Hydraulikzylinder muss also nicht rund sein, sondern kann auch rechteckige oder sonstige Formen haben.

Vorzugsweise ist die Halterung mittels eines nur in einer ersten Bewegungsrichtung der beiden Bewegungsrichtungen zwischen angehobener Position und abgesenkter Position wirksamen Mitnehmers an den Hydraulikzylinder und/oder an die Hydraulikpumpe angeschlossen ist, so dass eine in der ersten Bewegungsrichtung erfolgende Veränderung der Lage der Halterung eine Veränderung der Stellung des Hydraulikzylinders bzw. der Hydraulikpumpe bewirkt, sich die Halterung in der zweiten Bewegungsrichtung jedoch auch ohne Veränderung der Stellung des Hydraulikzylinders und/oder der Hydraulikpumpe bewegen kann.

Der Mitnehmer kann z.B. durch einen Teil eines Freilaufs oder ein Anschlagelement zwischen einem beweglichen Teil der Hydraulikkomponente - Hydraulikzylinder oder Hydraulikpumpe - und der Halterung sein.

Dadurch, dass eine Verbindung zwischen der Halterung und der Hydraulikkomponente nur in eine Bewegungsrichtung wirksam ist, kann sich die Halterung in die andere Bewegungsrichtung auch bei verriegelter Hydraulikkomponente von dieser lösen und bewegen. Dadurch kann sich beispielsweise ein zwischen Lastkraftwagen und Ladestelle verklemmter Anfahrpuffer gemeinsam mit dem Lastkraftwagen bewegen.

Es ist bevorzugt, dass lediglich eine in einer Richtung von der angehobenen Position zu der abgesenkten Position hin erfolgende Veränderung der Lage der Halterung eine Veränderung der Stellung des Hydraulikzylinders bzw. der Hydraulikpumpe unter Zu- und/oder Abfluss von Hydraulikmedium bewirkt.

Zum Beispiel liegt die Halterung zumindest mit einem Teilbereich - der z.B. als Mitnehmer oder Anschlag wirken kann - auf einem Stößel des Hydraulikzylinders auf. Im Normalfall wird die Halterung zusammen mit dem Anfahrpuffer durch die Schwerkraft in die Anlage gegen den Hydraulikzylinder nach unten bewegt und wird bei Bewegung des Hydraulikzylinders nach oben in Richtung angehobene Position mitgenommen. Verklemmt sich der Anfahrpuffer in einer angehobenen Position zwischen Lastkraftwagen und Ladestelle, dann kann sich der Hydraulikzylinder alleine nach unten bewegen, ohne durch Mitnahme des Anfahrpuffers den Lastkraftwagen oder die Ladestelle zu beschädigen. Der an dem Lastkraftwagen angreifende verklemmte Ladepuffer kann sich zusammen mit Lastkraftwagen nach oben und unten bewegen.

Vorzugsweise sind der Hydraulikzylinder/Hydraulikpumpe und/oder die Halterung in die angehobene Position hinein mittels eines Vorspannelementes vorgespannt. Ohne Verriegelung bewegt sich somit der Anfahrpuffer - z.B. mitgenommen durch die vorgespannte Hydraulikkomponente - selbsttätig in die angehobene Position. Durch Betätigung der Hydrauliksperreinrichtung kann die Hydraulikkomponente und/oder der daran angreifende Anfahrpuffer in jeder gewünschten Position arretiert werden. Die Hydrauliksperreinrichtung braucht hierbei nur in eine Richtung zu wirken, z.B. entgegen der Vorspannrichtung des Vorspannelementes. So könnte auch bei betätigter Hydrauliksperreinrichtung die Halterung manuell entgegen der Kraft des Vorspannelements nach unten gedrückt werden; die Hydrauliksperreinrichtung hält jedoch die Halterung in der dann gewählten Position entgegen der Kraft des Vorspannelements fest.

Es ist bevorzugt, dass der Hydraulikzylinder durch eine Gasdruckfeder in die der angehobenen Position entsprechende Stellung vorgespannt ist. Alternativ oder zusätzlich können auch andere Federn, wie z.B. Schraubenfedern, insbesondere Schraubendruckfedern vorgesehen sein.

Vorzugsweise ist in dem Hydraulikzylinder, insbesondere in einem Kolben und/oder einem Stößel desselben, ein Hohlraum vorgesehen, in dem das Vorspannelement untergebracht ist. Dies ergibt eine kompakte Bauform, und das Vorspannelement ist geschützt untergebracht. Insbesondere ist die Gasdruckfeder in dem Hohlraum angeordnet. Insbesondere bei Verwendung einer Schraubenfeder kann diese aber selbstverständlich auch außerhalb des Zylinders, z.B. konzentrisch um einen Stößel herum angeordnet sein. Das Vorspannelement kann auch ganz extern angeordnet sein und z.B. über ein Getriebe oder einen Mitnehmer oder dergleichen angeschlossen sein.

Insbesondere kann eine Kombination aus Hydraulikzylinder mit Gasdruckfeder in einer Einheit integriert werden. Beispielsweise kann ein Kolben auf einer Seite mittels Gasdruck beaufschlagt werden, um das Vorspannelement zu bilden, und auf einer anderen Seite mit Hydraulikmedium beaufschlagt werden, wobei der Zu- und Abfluss zu der entsprechenden Hydraulikkammer mittels der Hydrauliksperreinrichtung abschließbar ist.

Es ist bevorzugt, dass der Hydraulikzylinder/die Hydraulikpumpe durch die Hydrauliksperreinrichtung stufenlos in jeder gewünschten Position verriegelbar ist.

Es ist bevorzugt, dass der Hydraulikzylinder/Hydraulikpumpe an wenigstens eine Hydraulikleitung angeschlossen ist, wobei die Hydrauliksperreinrichtung ein Ventil aufweist, mit der die Hydraulikleitung wenigstens in eine Richtung blockierbar ist.

Es ist bevorzugt, dass die Hydrauliksperreinrichtung wenigstens einen Aktor zur signalgesteuerten Betätigung eines Sperrvorgangs und/oder eines Entsperrvorgangs aufweist.

Eine derartige Ausbildung hat den Vorteil, dass die Hydrauliksperreinrichtung auch fernbedient werden kann. Z.B. könnte die Hydrauliksperreinrichtung durch eine Steuerung eines an der Ladestelle angeordneten Tores angesteuert werden.

Als Aktor können beispielsweise ein Solenoid und/oder ein Elektromagnet zum Betätigen des Ventils vorgesehen sein.

In einer weiteren Ausführungsform wird das Ventil mittels einer mechanischen Betätigungseinrichtung, insbesondere mittels eines Hebels und/oder mittels eines Seilzugs oder dergleichen, betätigt. Auch kann eine Fernbedienung zum Fernbedienen des Ventils vorgesehen sein. Durch Verwendung einer Fernbedienung kann die Anfahrpuffervorrichtung z.B. auch von der Position des Tores oder von einer Position vom Inneren des durch das Tor verschlossenen Gebäudes aus betätigt werden. Die Fernbedienung kann z.B. auch eine mobile Fernbedienung, z.B. kabelgebunden mittels Spiralkabel oder dergleichen oder auch eine drahtloses Fernbedienung sein. Die Fernbedienung kann neben der Funktion der Anfahrpuffersteuerung auch weitere Funktionen, wie z.B. das Fernbedienen eines Torantriebs des Tores zum Einstellen einer gewünschten Torposition, haben.

In einer möglichen Ausgestaltung ist die Halterung an einer rein vertikal gerichteten Bewegungsbahn geführt.

Eine besonders bevorzugte Ausführungsform der Anfahrpuffervorrichtung ist dagegen gekennzeichnet durch eine Führung zur beweglichen Lagerung der Halterung, so dass diese zwischen der angehobenen Position und der abgesenkten Position beweglich ist, wobei die Führung die Halterung auf einer Bewegungsbahn führt, die bei einer nach unten gerichteten Bewegung auch eine horizontale Bewegungsrichtungskomponente weg von einem anzudockenden Lastkraftwagen hat.

Es ist bevorzugt, dass die Bewegungsbahn der Führung wenigstens teilweise eine schräge Linearbewegungsbahn ist.

Durch eine sich zumindest mit einer Richtungsbewegung von einem anzudockenden LKW weg bewegende Halterung kann sich ein verklemmter Puffer selbst frei von dem Lastkraftwagen weg bewegen.

Gemäß einem weiteren Aspekt schafft die Erfindung eine Ladestellenausrüstung mit einem Tor zum Verschließen einer Ladeöffnung und/oder einer Ladebrücke sowie mit wenigstens einer Anfahrpuffervorrichtung gemäß der Erfindung oder deren vorteilhaften Ausgestaltungen.

Es ist bevorzugt, dass die Hydrauliksperreinrichtung an ein Steuerungs- oder Überwachungsgerät des Tors und/oder der Ladebrücke angeschlossen ist, um ein Sperren oder Entsperren abhängig von einem Betrieb und/oder einer Stellung des Tores und/oder der Ladebrücke zu steuern.

Vorzugsweise wird eine Anfahrpuffervorrichtung zum Schaffen eines beweglichen Anfahrpuffers vorgeschlagen. Der bewegliche Anfahrpuffer ist an einer Halterung angebracht und lässt sich über ein Bedienelement betätigen und/oder verriegeln. Das Bedienelement kann ein hydraulischer Zylinder sein, der z.B. in die Richtung nach oben durch ein Vorspannelement vorgespannt ist. Insbesondere ist ein hydraulischer Zylinder durch eine Gasdruckfeder vorgespannt. Der Zylinder nimmt den Anfahrpuffer bei entriegelter Arretiereinrichtung mit nach oben.

Als Hydraulikmedium ist vorzugsweise ein Hydrauliköl eingesetzt.

Um den Hydraulikzylinder in jeder gewünschten Position - vorzugsweise stufenlos - zu verriegeln - und vorzugsweise in der untersten Position - ist der Hydraulikkreis - insbesondere ein Ölkreis - durch ein Ventil in eine Richtung blockiert. Ein Solenoid oder ein sonstiger Aktor entriegelt das Ventil, und der Zylinder schiebt sich hoch und nimmt somit die Halterung und den daran angebrachten Anfahrpuffer mit in die angehobene Position.

Eine Entriegelung kann z.B. stattfinden, wenn ein zugeordnetes Tor geschlossen wird und/oder wenn eine zugeordnete Ladebrücke in einer Andockposition (Ruhestellung) verfahren wird.

Es kann eine Steuerung angeschlossen sein, die eine Entriegelung dann verhindert, wenn das Tor geöffnet ist und/oder sich eine Ladebrücke nicht in einer Ruhestellung befindet und/oder wenn anhand anderer Maßnahmen - z.B. Sensoren - festgestellt wird, dass eine Bewegung des Anfahrpuffers unerwünscht ist, z.B. weil sich ein Lastkraftwagen an der Ladestelle befindet.

Die Halterung kann aus der angehobenen Position durch Fußbetätigung oder Handbetätigung nach unten gedrückt werden. Hierzu ist das Ventil entweder offen; oder es sperrt nur in eine Richtung, lässt aber Hydraulikfluss in der anderen Richtung zu.

Die Führung für die Halterung könnte unter einem Winkel schräg ausgeführt sein. Dies bewirkt, dass sich der Anfahrpuffer nach unten und auch gleichzeitig nach hinten bewegen kann. Ein durch einen angefahrenen LKW verklemmter Puffer kann sich damit selbst frei von dem LKW weg bewegen.

Ausführungsbeispiele der Erfindung werden nachfolgend anhand der beigefügten Zeichnungen näher erläutert. Darin zeigt:
- Fig. 1: eine Seitenansicht auf eine Anfahrpuffervorrichtung mit einer Halterung für einen Anfahrpuffer, einer Führung für die Halterung und einem mit einer Arretiereinrichtung versehenen Hydraulikzylinder als Bedienelement in einer angehobenen Position;
- Fig. 2: eine Vorderansicht der Anfahrpuffervorrichtung von Fig. 1;
- Fig. 3: eine Ansicht wie in Fig. 1, wobei die Anfahrpuffervorrichtung in einer abgesenkten Position ist;
- Fig. 4: eine Vorderansicht auf die Anfahrpuffervorrichtung von Fig. 3 in der abgesenkten Position;
- Fig. 5: eine erste perspektivische Ansicht auf die Anfahrpuffervorrichtung von Fig. 1;
- Fig. 6: eine zweite perspektivische Ansicht auf die Anfahrpuffervorrichtung von Fig. 1;
- Fig. 7: ein Fluidschaltbild für eine erste Ausführungsform des Hydraulikzylinders mit Arretiereinrichtung;
- Fig. 8: ein Fluidschaltbild einer zweiten Ausführungsform des Hydraulikzylinders mit Arretiervorrichtung;
- Fig. 9: eine schematische perspektivische Ansicht einer ersten Ausführungsform einer Ladestellenvorrichtung, die mit einer ersten und einer zweiten Anfahrpuffervorrichtung der in den Fig. 1 bis 6 gezeigten Art versehen ist;
- Fig. 10: eine schematische perspektivische Darstellung einer zweiten Ausführungsform einer Ladestellenvorrichtung, die mit Anfahrpuffervorrichtungen der in den Fig. 1 bis 6 gezeigten Art versehen ist;
- Fig. 11: eine Vorderansicht auf eine bevorzugte Ausführungsform des Hydraulikzylinders mit Arretiereinrichtung, wobei ein ausgefahrener Stößel zu Darstellungszwecken teilweise weggebrochen dargestellt ist;
- Fig. 12: eine perspektivische Ansicht des Hydraulikzylinders von Fig. 11;
- Fig. 13: eine perspektivische Ansicht des Hydraulikzylinders kombiniert mit der Führung für die Anfahrpuffervorrichtung der Fig. 1 bis 6;
- Fig. 14: einen oberen Bereich der in Fig. 13 gezeigten Kombination und einer Endplatte der Halterung, die als Mitnehmer und/oder Anschlag zum Mitnehmen der Halterung wirkt und im Eingriff mit dem oberen Ende des Stößels gezeigt ist; und
- Fig. 15: den Hydraulikzylinder im vertikalen Längsschnitt.

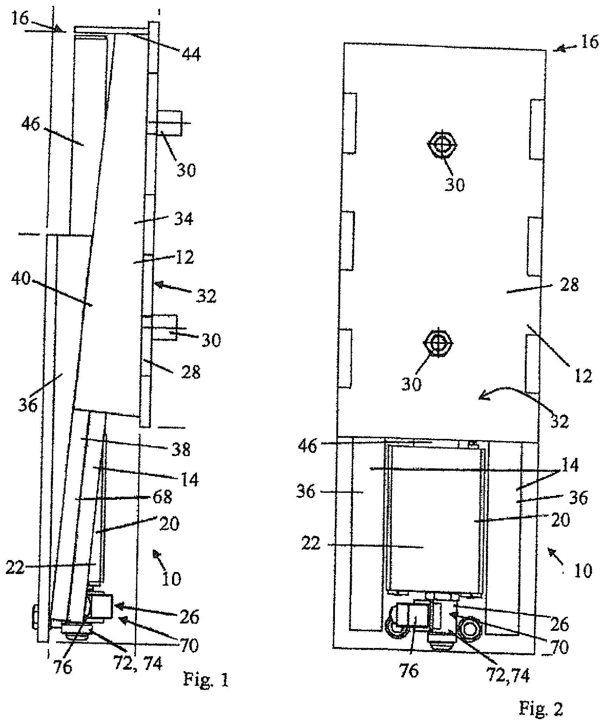

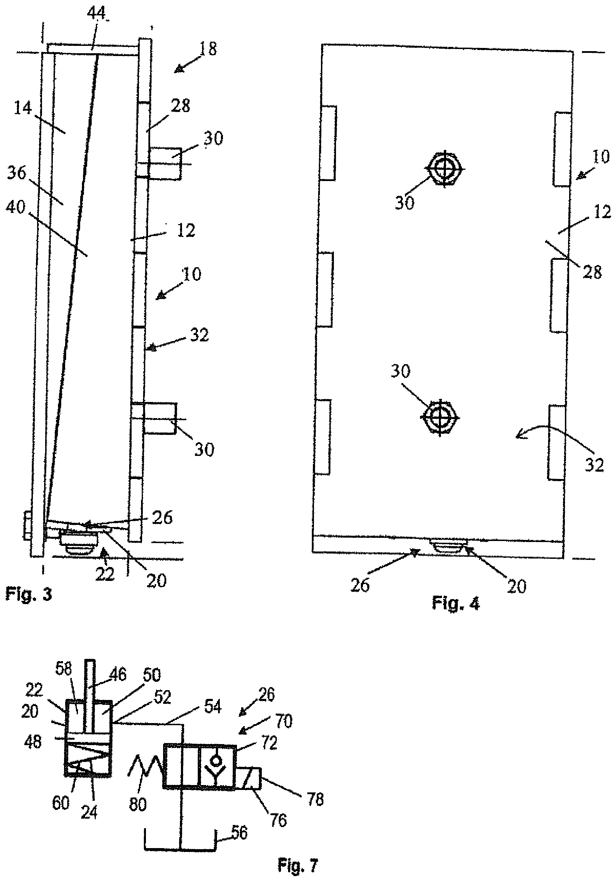

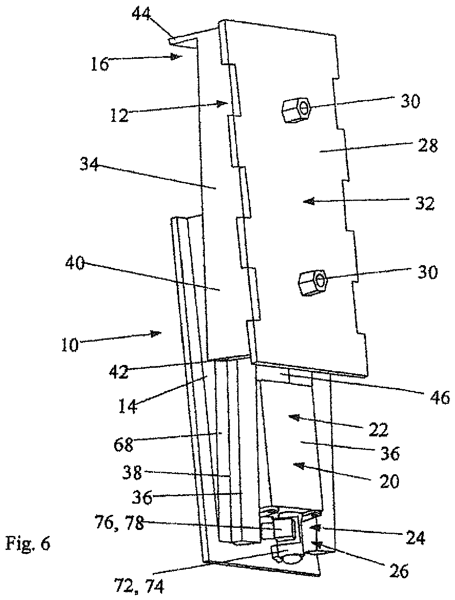

Die Fig. 1 bis 6 zeigen eine Anfahrpuffervorrichtung 10 mit einer Halterung 12 für einen in den Figuren nicht näher dargestellten Anfahrpuffer. Die Halterung 12 ist an einer Führung 14 entlang einer Bewegungsbahn 68 nach oben und nach unten verschiebbar gelagert, wobei in den Fig. 1, 2, 6 und 7 die Halterung 12 in einer oberen Endstellung einer angehobenen Position 16 und in den Fig. 3 und 4 in einer unteren Endstellung einer abgesenkten Position 18 gezeigt ist.

Zum Bewegen der Halterung 12 zwischen der angehobenen Position 16 und der abgesenkten Position 18 ist ein Bedienelement 20 vorgesehen, welches einen Hydraulikzylinder 22 aufweist. Weiter weist das Bedienelement 20 ein Vorspannelement 24 und eine Arretiereinrichtung 26 auf.

Die Halterung 12 ist zum Halten eines Anfahrpuffers ausgebildet und weist eine Basisplatte 28 als Untergrund für den Anfahrpuffer auf, wobei die Basisplatte 28 zwei Vorsprünge 30 zum formschlüssigen Erfassen des Anfahrpuffers aufweist. Auf einer Vorderseite 32 der Basisplatte 28 kann wahlweise ein Anfahrpuffer aus Gummi oder PU oder ein Stahlanfahrpuffer befestigt werden, wie dies beispielsweise auf S. 53 der Firmenbroschüre "Verladetechnik - Komplettlösungen für mehr Effizienz" der Hörmann KG Verkaufsgesellschaft mit dem Druckvermerk Stand 5.2013 näher beschrieben und gezeigt ist. Weiter weist die Halterung 12 auf der Rückseite ein z.B. C-profilförmiges Stützelement 34 zum Angreifen an oder Eingreifen in Führungsschienen 36 der Führung 14 auf.

Die Führung 14 weist etwa U-förmig profilierte Führungsschienen 36 auf, deren Führungsnut 38 an beiden Seiten der Anfahrpuffervorrichtung 10 nach außen hin offen ist. Das Stützelement 34 weist entsprechende C-Schenkel 40 mit nach innen zurückgebogenen Endflanschen 42 auf, die in die Führungsnuten 38 eingreifen. Sowohl die Führungsnuten 38 als auch die Endflansche 42 sind jedoch nicht exakt in vertikaler Richtung ausgerichtet, sondern in einem Winkel schräg derart ausgerichtet, dass sich die Halterung 12 bei einer Bewegung nach oben auch nach vorne und bei einer Bewegung nach unten auch nach hinten bewegt. Mit anderen Worten ist die Bewegungsbahn 68 eine in einem Winkel schräg zur Basisplatte 28 geneigte Linearbewegungsbahn.

Weiter weist die Halterung 12 auf ihrer Rückseite am oberen Ende eine obere Endplatte 44 auf, die sich von der Rückseite der Basisplatte 28 in horizontaler Richtung weg erstreckt und an welchem ein Stößel 46 des Hydraulikzylinders 22 angreift.

In einer nicht näher dargestellten Ausgestaltung ist der Stößel 46 zur beidseitigen gemeinsamen Bewegung an die Endplatte angeschlossen. Zum Beispiel ist bei dieser Ausgestaltung ein oberes Ende des Stößels 48 an die Endplatte 44 angeschweißt oder angeschraubt.

In der dargestellten bevorzugten Ausgestaltung liegt die Endplatte 44 einfach auf dem oberen Ende des Stößel 46 auf. Die Endplatte 44 wirkt somit als Anschlag und Mitnehmer, der bei Aufwärtsbewegung des Stößels 46 bewirkt, dass die Halterung 12 sich mit nach oben bewegt, und bei Abwärtsbewegung der Halterung 12 den Stößel 46 mitnimmt. Bei Bewegung in der Gegenrichtung kann sich die Endplatte 44 von dem oberen Ende des Stößels 44 abheben.

Bei dieser Ausgestaltung ist das bewegliche Element des Hydraulikzylinders 22 somit nur bei Bewegung in einer ersten der beiden Bewegungsrichtungen zur gemeinsamen Bewegung an die Halterung 12 angeschlossen, bei Bewegung in der entgegen gerichteten zweiten Bewegungsrichtung können sich das bewegliche Element des Hydraulikzylinders 22 und die Halterung relativ zueinander bewegen.

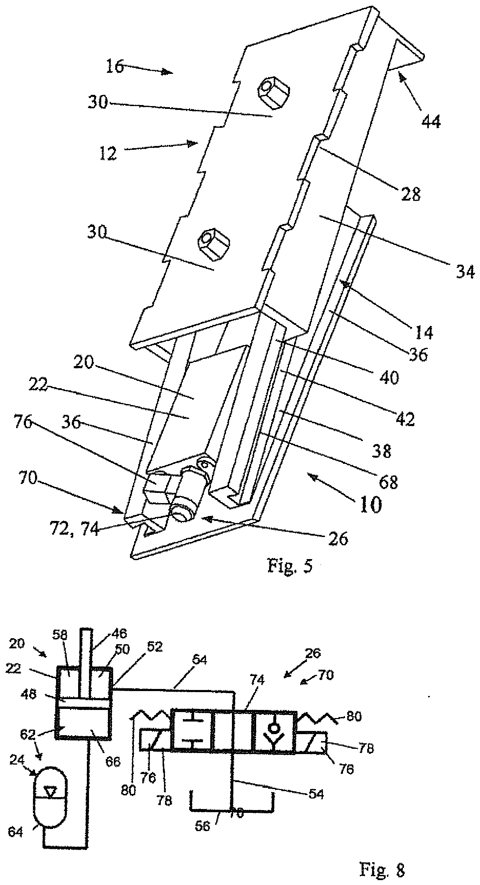

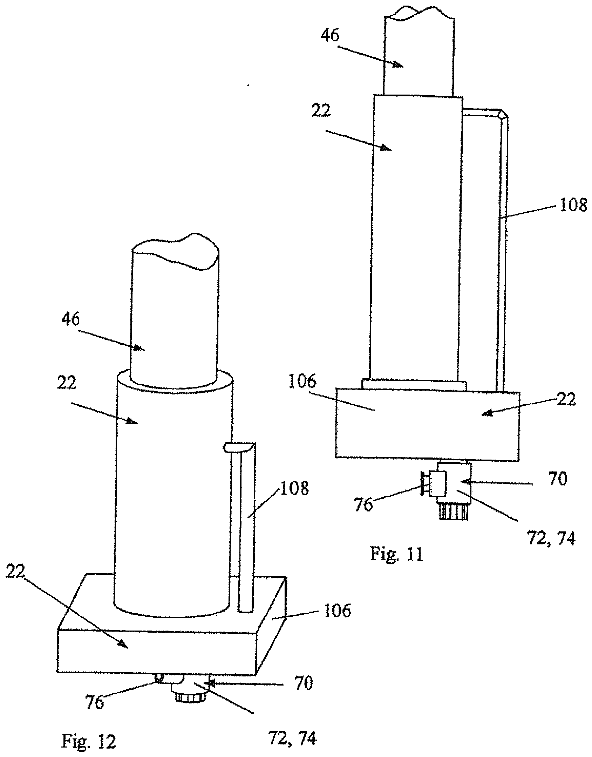

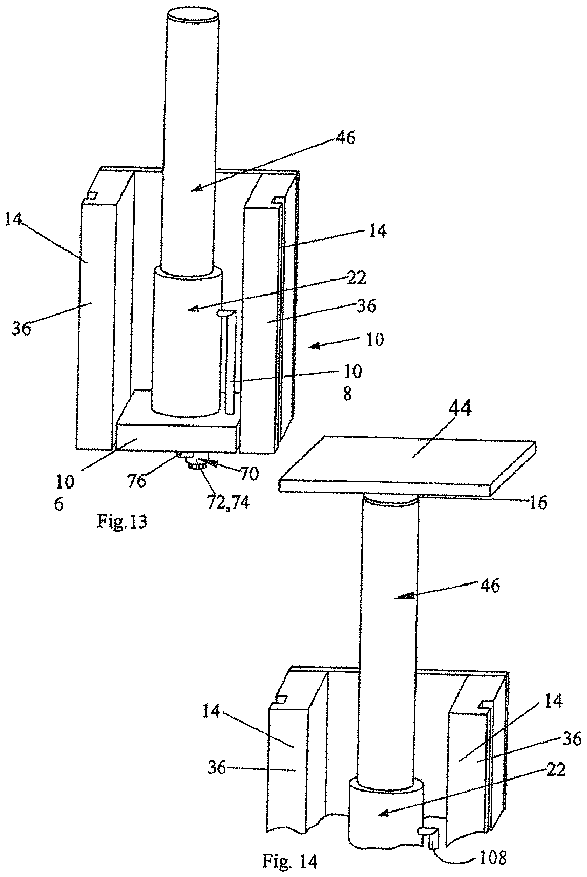

In den Fig. 7 und 8 sind Fluidschaltbilder zur Erläuterung des schematischen Aufbaus des Hydraulikzylinders 22, des Vorspannelementes 24 und der Arretiereinrichtung 26 erläutert. Ein praktischer Aufbau des Bedienelements 20 mit dem Hydraulikzylinder 22 und dem Vorspannelement 24 ist in den Fig. 11 bis 15 näher dargestellt.

Der Hydraulikzylinder 22 weist gemäß diesen Fig. 7 und 8 sowie Fig. 11 bis 15 den an die obere Endplatte 44 angreifenden Stößel 46 auf, der mit einem Kolben 48 verbunden ist. Der Kolben 48 begrenzt eine Hydraulikkammer 50 des Hydraulikzylinders 22, deren hier als ein Anschluss dargestellter Zu- und/oder Abfluss 52 an eine Hydraulikleitung 54 angeschlossen ist, die zu einem Behälter 56 für Hydraulikmedium 58, wie beispielsweise Öl, führt.

Das Vorspannelement 24 spannt die Halterung 12 in die angehobene Position 16 vor. In den in den Fig. 7 und 8 dargestellten Ausführungsbeispielen ist das Vorspannelement 24 dem Hydraulikzylinder 22 zugeordnet und spannt den Hydraulikzylinder 22 in seine angehobene Position 16 vor.

Bei dem in Fig. 7 dargestellten Ausführungsbeispiel ist der Hydraulikzylinder 22 mit einer Feder 60 - z.B. Schraubendruckfeder - zum Vorspannen des Kolbens 48 in die obere Position versehen. In dem in Fig. 7 beispielhaft dargestellten Funktionsschema ist die Feder 60 unterhalb des Kolbens 48 und die Hydraulikkammer 50 oberhalb des Kolbens 48 gezeigt. Dies soll lediglich die Funktion der gegeneinander arbeitenden Feder 60 und Hydraulikkammer 50 verdeutlichen. Die konkrete Anordnung kann nach praktischen Erwägungen ausgewählt werden. Selbstverständlich sind z.B. Ausführungen möglich, bei denen die Feder 60 oberhalb des Kolbens 48, z.B. am Stößel 46 angreifend angeordnet ist und die Hydraulikkammer 60 unterhalb des Kolbens 48 angeordnet ist. Eine als Schraubenfeder ausgebildete Feder 60 kann z.B. auch extern angeordnet sein.

Bei dem in Fig. 8 dargestellten Ausführungsbeispiel ist anstelle einer mechanischen Feder 60 eine Gasdruckfeder 62 vorgesehen, die durch einen Gasbehälter 64 mit Gasvorspannung angedeutet ist, die an eine Gaskammer 66 derart angeschlossen ist, dass das in der Gaskammer 66 befindliche Gas den Kolben 48 beaufschlagt und somit den Hydraulikzylinder 22 in seine obere angehobene Position hinein vorspannt. Auch hier ist lediglich ein Funktionsschema angegeben.

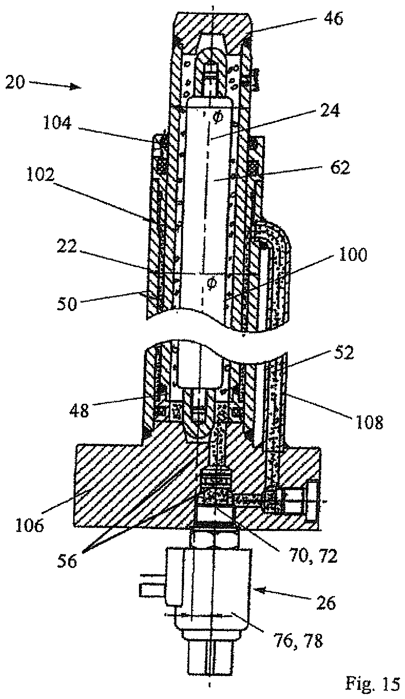

Eine bevorzugte praktische Ausgestaltung ist in den Fig. 11 bis 15 näher gezeigt. Wie insbesondere Fig. 15 entnehmbar, ist der Kolben 48 und der Stößel 46 bei einer bevorzugten Ausführungsform des Bedienelements 20 innen hohl, wobei die Gasdruckfeder 62 in dem dadurch gebildeten Hohlraum 100 angeordnet ist. Eine Füllung mit Öl 102 ist in Fig. 15 durch Punkte und eine Füllung mit Luft 104 ist in Fig. 15 mit Kringeln angedeutet.

Die Arretiereinrichtung 26 dient dazu, die Halterung 12 in wenigstens einer Position auf ihrer Bewegungsbahn 68 zu arretieren.

Wie in den Fig. 7 und 8 dargestellt, weist die Arretiereinrichtung 26 eine Hydrauliksperreinrichtung 70 auf, die den Zu- und/oder Abfluss 52 des Hydraulikzylinders 22 sperrt.

Die Hydrauliksperreinrichtung 70 sperrt in einer Sperrstellung insbesondere den Abfluss von Hydraulikmedium 58 aus der Hydraulikkammer 50, so dass auch unter Einwirkung der Kraft des Vorspannelements 24 der Kolben 48 nicht nach oben bewegt werden kann. Ein Zufluss von Hydraulikmedium 58 zu der Hydraulikkammer 50 kann zugelassen werden, so dass der Stößel 46 und der Kolben 48 manuell oder mit dem Fuß entgegen der Kraft des Vorspannelements 24 nach unten gedrückt werden kann, wobei Hydraulikmedium 58 aus dem Behälter 56 über die Hydraulikleitung 54 in die Hydraulikkammer 50 fließt.

In den in den Fig. 7 und 8 dargestellten Ausführungsbeispielen weist die Hydrauliksperreinrichtung 70 ein Ventil 72, 74 auf.

Wie in Fig. 7 dargestellt, ist das Ventil 72 wenigstens derart ausgebildet, dass es in einer ersten Stellung - OFFEN-Stellung - einen Zu- und Abfluss von Hydraulikmedium 58 durch die Hydraulikleitung 54 zu der Hydraulikkammer 50 bzw. aus der Hydraulikkammer 50 hinaus zulässt. In einer zweiten Stellung - Sperrstellung - sperrt das Ventil 72 die Hydraulikleitung 54 in einer Richtung, so dass zwar Hydraulikmedium 58 in die Hydraulikkammer 50 hinein fließen kann, jedoch nicht aus ihr heraus. Dadurch wird der Kolben 48 und damit der Stößel 46 und die daran angebrachte Halterung 12 an einer Bewegung nach oben gehindert und entsprechend arretiert. So kann man beispielsweise die Halterung 10 in der unteren Einstellung der abgesenkten Position 18 arretieren. Es ist aber auch eine stufenlose Einstellung oder Auswahl der Arretierposition möglich.

Das in Fig. 8 dargestellte zweite Ventil 74 lässt in einer Stellung - OFFEN-Stellung, hier die Mittelstellung - einen Zu- und/oder Abfluss 52 von Hydraulikmedium 58 in die Hydraulikkammer 50 hinein und aus dieser hinaus zu. In einer zweiten Stellung - vollständige Sperrstellung - ist sowohl der Zufluss als auch der Abfluss blockiert; der Kolben 48 lässt sich aufgrund der Inkompressibilität von Hydraulikmedium 58 nicht mehr bewegen. Als weitere Stellung ist die Sperrung in nur einer Richtung dargestellt, die auch das erste Ventil 72 vorsieht.

Eine nicht näher dargestellte weitere Ausführungsform der Ventile sieht nur entweder die OFFEN-Stellung oder die vollständige Sperrstellung vor.

Das jeweilige Ventil 72, 74 der Hydrauliksperreinrichtung 70 lässt sich über einen Aktor 76 signalgesteuert betätigen. Als Aktor 76 ist beispielsweise ein Solenoid 78 oder Elektromagnet vorgesehen.

In den in den Fig. 7 und 8 gezeigten Ausführungsbeispielen sind die Ventile 72, 74 in der Normalstellung offen und werden durch eine Rückholfeder 80 wieder in diese Normalstellung bewegt. Für einen Sperrvorgang wird der Elektromagnet bzw. Solenoid 78 bestromt, so dass das Ventil 72, 74 in eine seiner Sperrstellungen bewegt wird.

Bei dem in den Fig. 11 bis 15 dargestellten Ausführungsbeispiel ist der Behälter 56 mit Hydraulikmedium 58 in dem Sockelblock 106 des Hydraulikzylinders 22 angeordnet. Das unterhalb des Sockelblocks 106 angeordnete Ventil 72, 74 sperrt eine außen vorbei geführte Hydraulikleitung 108, die den Zu- und Abfluss 52 zu der oberhalb des Kolbens angeordneten Hydraulikkammer 50 bildet zumindest in eine Richtung.

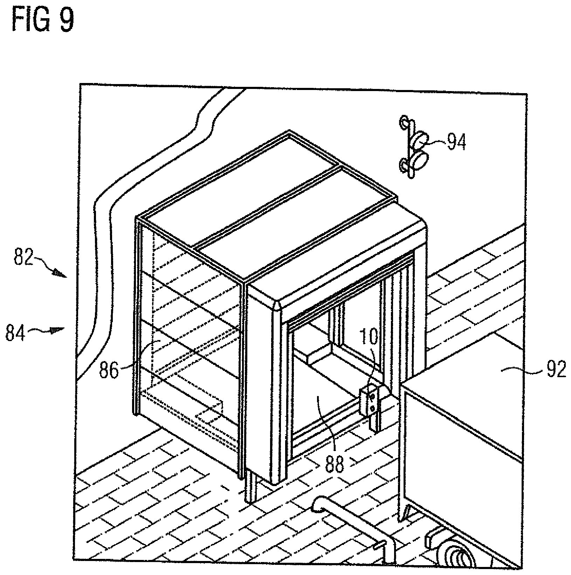

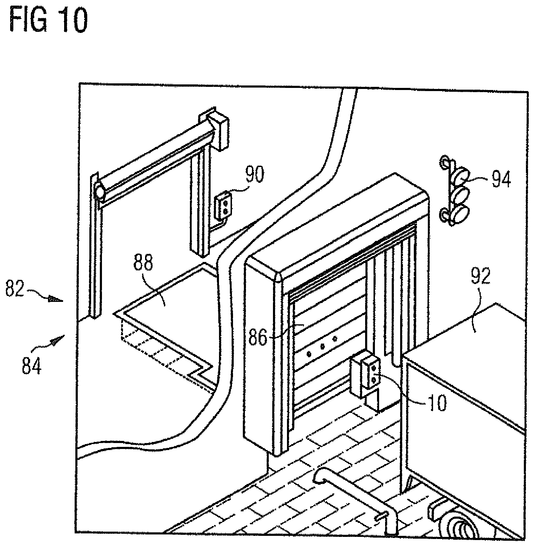

Wie die Fig. 9 und 10 zeigen, können Anfahrpuffervorrichtungen 10 der in den Fig. 1 bis 8 erläuterten Art jeweils links und rechts einer Ladestelle 82 in einer Ladestellenausrüstung 84 verwendet werden. Die Ladestellenausrüstung 84 weist z.B. ein Tor 86 und/oder eine Ladebrücke 88 auf. Die Betätigung des Aktors 76 kann abhängig von einer Stellung des Tores 86 und/oder der Ladebrücke 88 erfolgen. Beispielsweise wird die Arretierung der Arretiereinrichtung 26 gelöst, wenn sich ein Tor 86 in geschlossener Position befindet. In einem anderen Beispiel wird die Arretierung der Arretiervorrichtung 26 gelöst, wenn sich die Ladebrücke 88 in einer Nichtgebrauchs-Stellung befindet.

Zum Beispiel kann der Solenoid 78 durch eine Steuerung 90 der Ladestellenausrüstung angesteuert werden.

Die Anfahrpuffervorrichtung 10 kann darüber hinaus auch einen (nicht dargestellten) Sensor zur Erfassung eines Lastkraftwagens 92 aufweisen, wobei der Sensor 92 seine Signale an die Steuerung 90 abgibt, um so beispielsweise über Lichtzeichen 94 den Anfahrvorgang zu unterstützen.

In nicht dargestellten weiteren Ausführungsformen ist anstelle des Hydraulikzylinders 22 und Kolbens 48 eine andere Art von Hydraulikpumpe vorgesehen, deren bewegliches Element getrieblich mit der Halterung zur gemeinsamen Bewegung verbunden ist und sich durch Sperren des Zu- und/oder Abflusses von Hydraulikmedium zumindest in einer Bewegungsrichtung blockieren lässt. In dem das bewegliche Element der Hydraulikpumpe mit der Halterung verbindenden Getriebe kann ein Freilauf vorgesehen sein, so dass die Halterung relativ zu dem beweglichen Element nach oben beweglich ist, an einer Bewegung nach unten aber bei hydraulisch verriegeltem Getriebe gehindert ist. Wird die Hydraulikpumpe zum Antreiben der Halterung nach oben bewegt, dann nimmt der Mitnehmer in dem Freilauf die Halterung mit nach oben.

Bei einer weiteren, hier nicht näher dargestellten Ausführungsform ist das Ventil 72, 74 anstelle durch einen elektromechanischen (z.B. Solenoid) Aktor manuell betätigbar. Z.B. ist ein Betätigungshebel oder ein sonstiges Betätigungselement zur manuellen Betätigung am Ventil vorgesehen. Bei einer anderen Ausgestaltung ist eine Bedienung von einer weiter entfernten Position durch ein Getriebe, wie z.B. ein Gestänge oder einen Seilzug oder dergleichen möglich. Somit kann z.B. der Anfahrpuffer auch rein mechanisch von der Position des Tores aus gesteuert freigegeben oder verriegelt werden.

### Bezugszeichenliste:

- 10: Anfahrpuffervorrichtung
- 12: Halterung
- 14: Führung
- 16: angehobene Position
- 18: abgesenkte Position
- 20: Bedienelement
- 22: Hydraulikzylinder
- 24: Vorspannelement
- 26: Arretiereinrichtung
- 28: Basisplatte
- 30: Vorsprung
- 32: Vorderseite
- 34: Stützelement
- 36: Führungsschiene
- 38: Führungsnut
- 40: C-Schenkel
- 42: Endflansch
- 44: obere Endplatte
- 46: Stößel
- 48: Kolben
- 50: Hydraulikkammer
- 52: Zu- und/oder Abfluss
- 54: Hydraulikleitung
- 56: Behälter
- 58: Hydraulikmedium
- 60: Feder
- 62: Gasdruckfeder
- 64: Gasbehälter
- 66: Gaskammer
- 68: Bewegungsbahn
- 70: Hydrauliksperreinrichtung
- 72: Ventil
- 74: Ventil
- 76: Aktor
- 78: Solenoid
- 80: Rückholfeder
- 82: Ladestelle
- 84: Ladestellenausrüstung
- 86: Tor
- 88: Ladebrücke
- 90: Steuerung
- 92: Lastkraftwagen
- 94: Lichtzeichen
- 100: Hohlraum
- 102: Füllung mit Öl
- 104: Füllung mit Luft
- 106: Sockelblock
- 108: Leitung

## Patentansprüche

1. Anfahrpuffervorrichtung (10) mit wenigstens einem an einer Halterung (12) gehaltenen Anfahrpuffer, wobei die Halterung (12) zwischen einer angehobenen Position (16) und einer abgesenkten Position (18) beweglich ist, und einer Arretiereinrichtung (26) zum Arretieren der Halterung (12), wobei die Anfahrpuffervorrichtung (10) derart ausgebildet ist, dass sie in wenigstens einer der Bewegungsrichtungen ausschließlich manuell oder motorlos bewegbar ist und nicht an eine externe Energiequelle anzuschließen ist,
**dadurch gekennzeichnet,**
**dass** die Anfahrpuffervorrichtung (10) derart ausgebildet ist, dass sie wenigstens in der nach oben gerichteten Bewegungsrichtung ausschließlich manuell oder motorlos bewegbar ist, dass die Halterung (12) an einen Hydraulikzylinder (22) und/oder eine Hydraulikpumpe so angeschlossen ist, dass eine Veränderung der Lage der Halterung (12) eine Veränderung der Stellung des Hydraulikzylinders (22) bzw. der Hydraulikpumpe unter Zu- und/oder Abfluss (52) von Hydraulikmedium (58) bewirkt, und
**dass** die Arretiereinrichtung (26) eine Hydrauliksperreinrichtung (70) zum Sperren des Zu- und/oder Abflusses (52) von Hydraulikmedium (58) zu und/oder von dem Hydraulikzylinder (22) bzw. der Hydraulikpumpe zwecks Arretierung des Hydraulikzylinders (22) bzw. der Hydraulikpumpe umfasst.

2. Anfahrpuffervorrichtung (10) nach Anspruch 1, **dadurch gekennzeichnet, dass** der Hydraulikzylinder (22) einen Antrieb (24, 60, 62) zum Bewegen der Halterung in eine Bewegungsrichtung und einen Behälter (56), insbesondere für das Hydraulikmedium, mehr insbesondere zum Bevorraten des Hydraulikmediums, umfasst,
dass der Antrieb ein Vorspannelement (24) zum Vorspannen des Hydraulikzylinders (22) bzw. der Hydraulikpumpe und/oder der Halterung (12) in die angehobene Position (16) ist,
dass der Hydraulikzylinder (22) und/oder ein Kolben (46) und/oder ein Stößel (48) des Hydraulikzylinders (22) einen inneren Hohlraum (100) aufweisen, in dem das Vorspannelement (24) aufgenommen ist,
und dass das Vorspannelement (24) derart ausgebildet ist, dass sich der Anfahrpuffer im nicht-arretierten Zustand mitgenommen durch den vorgespannten Hydraulikzylinder selbsttätig in die angehobene Position bewegt.

3. Anfahrpuffervorrichtung (10) nach einem der voranstehenden Ansprüche,
**dadurch gekennzeichnet,**
**dass** die Halterung (12) mittels eines nur in einer ersten Bewegungsrichtung der beiden Bewegungsrichtungen zwischen angehobener Position (16) und abgesenkter Position (18) wirksamen Mitnehmers (44), der Teil eines Freilaufs oder ein Anschlagelement zwischen einem beweglichen Teil des Hydraulikzylinders oder der Hydraulikpumpe und der Halterung ist, an den Hydraulikzylinder (22) bzw. an die Hydraulikpumpe angeschlossen ist, so dass eine in der ersten Bewegungsrichtung erfolgende Veränderung der Lage der Halterung (12) eine Veränderung der Stellung des Hydraulikzylinders (22) bzw. der Hydraulikpumpe bewirkt, sich die Halterung (12) in der zweiten Bewegungsrichtung jedoch auch ohne Veränderung der Stellung des Hydraulikzylinders (22) und/oder der Hydraulikpumpe bewegen kann.

4. Anfahrpuffervorrichtung (10) nach Anspruch 3,
**dadurch gekennzeichnet,**
**dass** lediglich eine in einer Richtung von der angehobenen Position zu der abgesenkten Position hin erfolgende Veränderung der Lage der Halterung (12) eine Veränderung der Stellung des Hydraulikzylinders (22) bzw. der Hydraulikpumpe unter Zu- und/oder Abfluss (52) von Hydraulikmedium (58) bewirkt.

5. Anfahrpuffervorrichtung nach einem der voranstehenden Ansprüche,
**dadurch gekennzeichnet,**
**dass** der Hydraulikzylinder (22) durch eine Gasdruckfeder (62) in die der angehobenen Position (16) entsprechende Stellung vorgespannt ist.

6. Anfahrpuffervorrichtung nach Anspruch 5,
**dadurch gekennzeichnet,**
**dass** der Hydraulikzylinder (22) und/oder ein Kolben (46) und/oder ein Stößel (48) des Hydraulikzylinders (22) einen inneren Hohlraum (100) aufweisen, in dem die Gasdruckfeder (62) aufgenommen ist.

7. Anfahrpuffervorrichtung (10) nach einem der voranstehenden Ansprüche,
**dadurch gekennzeichnet,**
**dass** der Hydraulikzylinder (22) und/oder die Hydraulikpumpe durch die Hydrauliksperreinrichtung (70) stufenlos in jeder gewünschten Position zumindest gegen eine Bewegung in einer Bewegungsrichtung verriegelbar ist.

8. Anfahrpuffervorrichtung (10) nach einem der voranstehenden Ansprüche,
**dadurch gekennzeichnet,**
**dass** der Hydraulikzylinder (22) an eine Hydraulikleitung (54) und/oder einen Hydraulikkreis angeschlossen ist, wobei die Hydrauliksperreinrichtung (70) ein Ventil (72, 74) aufweist, mit dem die Hydraulikleitung (54) bzw. der Hydraulikkreis wenigstens in eine Richtung blockierbar ist.

9. Anfahrpuffervorrichtung (10) nach einem der voranstehenden Ansprüche,
**dadurch gekennzeichnet,**
**dass** die Hydrauliksperreinrichtung (70) wenigstens einen Aktor (76) zur signalgesteuerten Betätigung eines Sperrvorgangs und/oder eines Entsperrvorgangs aufweist.

10. Anfahrpuffervorrichtung (10) nach Anspruch 8 und nach Anspruch 9, **gekennzeichnet durch** einen Solenoid (78) und/oder Elektromagnet zur Betätigung des Ventils (72, 74).

11. Anfahrpuffervorrichtung (10) nach einem der voranstehenden Ansprüche,
**gekennzeichnet durch** eine Führung zur beweglichen Lagerung der Halterung (12), so dass diese zwischen der angehobenen Position (16) und der abgesenkten Position (18) beweglich ist, wobei die Führung (14) die Halterung (12) auf einer Bewegungsbahn (68) führt, die bei einer nach unten gerichteten Bewegung auch eine horizontale Bewegungsrichtungskomponente weg von einem anzudockenden Lastkraftwagen (92) hat.

12. Anfahrpuffervorrichtung (10) nach Anspruch 11,
**dadurch gekennzeichnet,**
**dass** die Bewegungsbahn (68) der Führung (14) wenigstens teilweise eine schräge Linearbewegungsbahn ist.

13. Ladestellenausrüstung (84) mit einem Tor (86) zum Verschließen einer Ladeöffnung und/oder einer Ladebrücke (88) sowie mit wenigstens einer Anfahrpuffereinrichtung (10) nach einem der voranstehenden Ansprüche.

14. Ladestellenausrüstung (84) nach Anspruch 13 mit wenigstens einer Anfahrpuffervorrichtung (10) nach einem der Ansprüche 9 oder 10,
**dadurch gekennzeichnet,**
**dass** die Hydrauliksperreinrichtung (70) an ein Steuerungs- oder Überwachungsgerät des Tors (86) und/oder der Ladebrücke (88) angeschlossen ist, um ein Sperren oder Entsperren abhängig von einem Betrieb und/oder einer Stellung des Tores (86) und/oder der Ladebrücke (88) zu steuern.

## Claims

1. Docking buffer device (10), comprising at least one docking buffer supported on a mount (12), wherein the mount (12) is movable between a raised position (16) and a lowered position (18), and a locking device (26) for locking the mount (12), wherein the docking buffer device (10) is designed in a manner such as to be movable exclusively manually or motor-less in at least one of the movement directions and needs not be connected to an external power source,
**characterized in**
**that** the docking buffer device (10) is designed in such a manner that the same can be moved exclusively manually or motor-less in at least the upward movement direction, that the mount (12) is connected to a hydraulic cylinder (22) and/or a hydraulic pump in such a manner that a change in position of the mount (12) causes a change in posture of the hydraulic cylinder (22) or the hydraulic pump under the supply and/or discharge (52) of a hydraulic medium (58) and
**that** the locking device (26) comprises a hydraulic locking device (70) for locking the supply and/or discharge (52) of hydraulic medium (58) to and/or from the hydraulic cylinder (22) or hydraulic pump, for the purpose of locking the hydraulic cylinder (22) or hydraulic pump.

2. Docking buffer device (10) according to claim 1, **characterized in that** the hydraulic cylinder (22) comprises a driving unit (24, 60, 62) for moving the mount in a movement direction, and a reservoir (56), particularly for the hydraulic medium and more particularly for storing the hydraulic medium,
that the driving unit is a biasing element (24) for biasing the hydraulic cylinder (22) or hydraulic pump and/or the mount (12) into the raised position (16),
that the hydraulic cylinder (22) and/or a piston (46) and/or a plunger (48) of the hydraulic cylinder (22) have an internal cavity (100) in which the biasing element (24) is received,
and that the biasing element (24) is designed in such a manner that the docking buffer in the non-locked state is automatically moved into the raised position while being entrained by the biased hydraulic cylinder.

3. Docking buffer device (10) according to one of the preceding claims,
**characterized in that** the mount (12) is connected to the hydraulic cylinder (22) or hydraulic pump by means of a driver (44) that is only effective in a first movement direction of the two movement directions between the raised position (16) and the lowered position (18) and that forms part of a freewheel or a stop element between a movable part of the hydraulic cylinder or hydraulic pump and the mount so that a change in position of the mount (12) in the first movement direction causes a change in posture of the hydraulic cylinder (22) or hydraulic pump, whereas the mount (12) can move in the second movement direction even without a change in posture of the hydraulic cylinder (22) and/or hydraulic pump.

4. Docking buffer device (10) according to claim 3,
**characterized in that** only a change in position of the mount (12) in a direction from the raised position to the lowered position causes a change in posture of the hydraulic cylinder (22) or the hydraulic pump, under the supply and/or discharge (52) of hydraulic medium (58).

5. Docking buffer according to one of the preceding claims,
**characterized in that** the hydraulic cylinder (22) is biased into the posture corresponding to the raised position (16) by a gas pressure spring (62).

6. Docking buffer according to claim 5,
**characterized in that** the hydraulic cylinder (22) and/or a piston (46) and/or a plunger (48) of the hydraulic cylinder (22) have an internal cavity (100) in which the gas pressure spring (62) is received.

7. Docking buffer device (10) according to one of the preceding claims,
**characterized in that** the hydraulic cylinder (22) and/or the hydraulic pump are steplessly lockable in any desired position, at least against movement in one movement direction, by means of the hydraulic locking device (70).

8. Docking buffer device (10) according to one of the preceding claims,
**characterized in that** the hydraulic cylinder (22) is connected to a hydraulic conduit (54) and/or hydraulic circuit, wherein the hydraulic locking device (70) includes a valve (72, 74) with which the hydraulic conduit (54) or hydraulic circuit can be blocked at least in one direction.

9. Docking buffer device (10) according to one of the preceding claims
**characterized in that** the hydraulic locking device (70) at least comprises an actuator (76) for a signal-controlled actuation of a locking action and/or an unlocking action.

10. Docking buffer device (10) according to claim 8 or claim 9, **characterized by** a solenoid (78) and/or an electro-magnet for actuation of the valve (72, 74).

11. Docking buffer device (10) according to one of the preceding claims,
**characterized by** a guiding device for movably supporting the mount (12) so that the same is movable between the raised position (16) and the lowered position (18), wherein the guiding device (14) guides the mount (12) on a motion path (68) which in a downward movement also has a horizontal direction component away from a truck (92) to be docked.

12. Docking buffer device (10) according to claim 11,
**characterized in that** the motion path (68) of the guiding device (14) is an inclined linear motion path, at least partially.

13. Loading station equipment (84), comprising a gate (86) for closing a loading opening and/or a loading ramp (88), and at least one docking buffer device (10) as defined in any one of the preceding claims.

14. Loading station equipment (84) according to claim 13, comprising at least one docking buffer device (10) as defined in any one of the claims 9 or 10, **characterized in that** the hydraulic locking device (70) is connected to a control or monitoring device of the gate (86) and/or loading ramp (88), for controlling locking or unlocking in response to an operation and/or position of the gate (86) and/or the loading ramp (88).

## Revendications

1. Dispositif de butoir (10) ayant au moins un butoir maintenu sur un support (12), le support (12) étant mobile entre une position relevée (16) et une position abaissée (18), et un dispositif d'arrêt (26) permettant de bloquer le support (12), le dispositif de butoir (10) étant réalisé de façon à pouvoir être déplacé dans au moins l'une des directions de déplacement exclusivement manuellement ou de manière non motorisée et à être non raccordable à une source d'énergie externe,
**caractérisé en ce que**
le butoir (10) est réalisé de façon à pouvoir être déplacé exclusivement manuellement ou de manière non motorisée au moins dans la direction de déplacement dirigée vers le haut, le support (12) est connecté à un vérin hydraulique (22) et/ou à une pompe hydraulique de sorte qu'une modification de la position du support (12) entraîne une modification de la position du vérin hydraulique (22) ou de la pompe hydraulique suite à l'entrée et/ou à la sortie (52) de fluide hydraulique (58), et
le dispositif d'arrêt (26) comporte un dispositif de blocage hydraulique (70) pour permettre de bloquer l'entrée et/ou la sortie (52) de fluide hydraulique (58) vers et/ou à partir du cylindre hydraulique (22) ou de la pompe hydraulique pour arrêter le vérin hydraulique (22) ou la pompe hydraulique.

2. Dispositif de butoir (10) conforme à la revendication 1,
**caractérisé en ce que**
le vérin hydraulique (22) comporte un entraînement (24, 60, 62) permettant de déplacer le support dans une direction de déplacement et un réservoir (56), en particulier pour le fluide hydraulique, et plus particulièrement pour le stockage du fluide hydraulique,
l'entraînement est un élément de rappel (24) permettant de rappeler le vérin hydraulique (22) et/ou la pompe hydraulique et/ou le support (12) dans la position relevée (16),
le vérin hydraulique (22) et/ou un piston (46) et/ou un poussoir ou plongeur (48) du vérin hydraulique (22) comporte(nt) une cavité interne (100) dans laquelle est logé l'élément de rappel (24), et
l'élément de rappel (24) est réalisé de sorte que, à l'état non bloqué, le butoir se déplace automatiquement dans la position relevée en étant entraîné par le rappel vérin hydraulique.

3. Dispositif de butoir (10) conforme à l'une quelconque des revendications précédentes,
**caractérisé en ce que**
le support (12) est connecté au vérin hydraulique (22) ou à la pompe hydraulique au moyen d'un organe d'entraînement (44) n'agissant que dans une première direction de déplacement parmi les deux directions de déplacement entre la position relevée (16) et la position abaissée (18), qui est une partie d'une roue libre ou un élément de butée entre une partie mobile du vérin hydraulique ou de la pompe hydraulique et le support, de sorte qu'une modification s'effectuant dans la première direction de déplacement de la position du support (12) entraîne une modification de la position du vérin hydraulique (22) ou de la pompe hydraulique, le support (12) pouvant toutefois également se déplacer dans la seconde direction de déplacement sans modification de la position du vérin hydraulique (22) et/ou de la pompe hydraulique.

4. Dispositif de buttoir (10) conforme à la revendication 3,
**caractérisé en ce que**
seule une modification de la position du support (12) s'effectuant dans la direction allant de la position relevée vers la position abaissée entraîne une modification de la position du vérin hydraulique (22) ou de la pompe hydraulique, suite à l'entrée et/ou à la sortie (52) de fluide hydraulique (58).

5. Dispositif de butoir conforme à l'une des revendications précédentes,
**caractérisé en ce que**
le vérin hydraulique (22) est rappelé par un vérin pneumatique (62) dans la position correspondant à la position relevée (16).

6. Dispositif de butoir conforme à la revendication 5,
**caractérisé en ce que**
le vérin hydraulique (22) et/ou un piston (46) et/ou un poussoir (48) du vérin hydraulique (22) comporte(nt) une cavité interne (100) dans laquelle est logé le vérin pneumatique (62).

7. Dispositif de butoir (10) conforme à l'une des revendications précédentes,
**caractérisé en ce que**
le vérin hydraulique (22) et/ou la pompe hydraulique peut(peuvent) être verrouillé(s) progressivement par le dispositif de blocage hydraulique (70) dans chaque position souhaitée, au moins pour s'opposer à un déplacement dans une position de déplacement.

8. Dispositif de butoir (10) conforme à l'une des revendications précédentes,
**caractérisé en ce que**
le vérin hydraulique (22) est connecté à une conduite hydraulique (54) et/ou à un circuit hydraulique, le dispositif de blocage hydraulique (70) comprenant une soupape (72, 74) permettant de bloquer la conduite hydraulique (54) ou le circuit hydraulique dans au moins une direction.

9. Dispositif de butoir (10) conforme à l'une des revendications précédentes,
**caractérisé en ce que**
le dispositif de blocage hydraulique (70) comporte au moins un actionneur (76) permettant d'actionner suite à une commande par un signal un processus de blocage et/ou un processus de déblocage.

10. Dispositif de butoir (10) conforme à la revendication 8 et à la revendication 9,
**caractérisé par**
un solénoïde (78) et/ou un électroaimant permettant d'actionner la soupape (72, 74).

11. Dispositif de butoir (10) conforme à l'une des revendications précédentes,
**caractérisé par**
un guidage permettant un montage mobile du support (12) de sorte que celui-ci soit mobile entre la position relevée (16) et la position abaissée (18), le guidage (14) guidant le support (12) sur une voie de déplacement (68), qui, a, également lors d'un déplacement dirigé vers le bas, une composante horizontale opposée à un camion (92) devant être arrimé.

12. Dispositif de butoir (10) conforme à la revendication 11,
**caractérisé en ce que**
la voie de déplacement (68) du guidage (14) est au moins partiellement une voie de déplacement linéaire oblique.

13. Equipement de lieu de chargement (84) comprenant un portail (86) permettant de fermer une ouverture de chargement et/ou un pont de chargement (88) ainsi qu'au moins un dispositif de butoir (10) conforme à l'une des revendications précédentes.

14. Equipement de lieu de chargement (84) conforme à la revendication 13, équipé d'au moins un dispositif de butoir (10) conforme à l'une des revendications 9 et 10,
**caractérisé en ce que**
le dispositif de blocage hydraulique (70) est connecté à un appareil de commande ou de surveillance du portail (86) et/ou du pont de chargement (88) pour permettre de commander un blocage ou un déblocage en fonction du fonctionnement et/ou de la position du portail (86) et/ou du pont de chargement (88).
